(19) **Europäisches Patentamt**

**European Patent Office**    (11) Veröffentlichungsnummer: **0 060 379**

**Office européen des brevets**    **B1**

(12)    **EUROPÄISCHE PATENTSCHRIFT**

(45) Veröffentlichungstag der Patentschrift:
23.07.86

(21) Anmeldenummer: **82100219.3**

(22) Anmeldetag: **14.01.82**

(51) Int. Cl.⁴: **F 16 B 41/00**

(54)    **Diebstahlsicherung für Heizkörperventil-Thermostaten.**

(30) Priorität: **14.03.81 DE 3109877**

(43) Veröffentlichungstag der Anmeldung:
**22.09.82 Patentblatt 82/38**

(45) Bekanntmachung des Hinweises auf die Patenterteilung:
**23.07.86 Patentblatt 86/30**

(84) Benannte Vertragsstaaten:
**AT CH DE FR IT LI**

(56) Entgegenhaltungen:
**DE-A-3 102 335**
**DE-U-7 902 690**
**NL-C-74 879**

(73) Patentinhaber: **Wella Aktiengesellschaft, Berliner Allee 65, D-6100 Darmstadt (DE)**

(72) Erfinder: **Beer, Erich, Bachstrasse 38, D-6418 Hünfeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 060 379 B1

## Beschreibung

Die Erfindung betrifft eine Diebstahlsicherung für Heizkörperventil-Thermostaten mit zwei aneinander festlegbaren Ringhalbschalen, die eine den Thermostaten mit dem Heizkörperventil verbindende Überwurfmutter umgreifen, die eine Umfangsnut aufweisen und von einem axial überschiebbaren, geschlossenen metallischen Sicherungsring umgeben sind.

Heizkörperventil-Thermostate, die nur durch Lösen einer Überwurfmutter demontiert werden können, sind in öffentlich zugänglichen Räumen der Gefahr eines Diebstahls unterworfen, da diese Thermostaten leicht und unbemerkt demontiert werden können. Deshalb sind Diebstahlsicherungen entwickelt worden, bei denen ein aus zwei Ringhalbschalen bestehender Schutzring die Überwurfmutter. so umgreift, daß die Überwurfmutter nicht mehr zugänglich ist. Die aus Kunststoff bestehenden Ringhalbschalen weisen an ihren Verbindungsstellen jeweils an der anderen Ringhalbschale einrastbare Rastzungen auf (DE-V-79 02 690).

Diese Diebstahlsicherungen können zwar nur unter mindestens teilweiser Zerstörung gelöst werden. Die Ausführung der Ringhalbschalen aus Kunststoff, die einerseits nötig ist, um ein einfaches Lösen im Bedarfsfall zu ermöglichen, erleichtert aber andererseits auch das unbefugte Lösen durch Zerstören der Ringhalbschalen.

Deshalb ist eine Diebstahlsicherung der eingangs genannten Art vorgeschlagen worden (DE-A-31 02 335) bei der ein metallischer Sicherungsring die Ringhalbschalen umgibt, der mittels eines Spreizrings in der Umfangsnut der Ringhalbschalen festgelegt ist. Mittels eines Schlüssels kann der Spreizring aufgespreizt werden, so daß der Sicherungsring ohne Zerstörung eines Teils abgenommen werden kann. Es ist jedoch nicht vermeidbar, daß der Sicherungsring von Unbefugten mittels eines nachgearbeiteten Schlüssels oder eines ähnlichen Werkzeugs geöffnet werden kann.

Aufgabe der Erfindung ist es daher, eine Diebstahlsicherung der eingangs genannten Art so auszubilden, daß bei einfachem und platzsparendem Aufbau der Diebstahlsicherung eine leichte und einfache Anbringung gewährleistet und das Lösen nur unter mindestens teilweiser Zerstörung ermöglicht wird.

Diese Aufgabe wird erfindungsgemäß dadurch gelöst, daß der Sicherungsring an seiner Innenseite am Umfang verteilt mehrere einseitig angeschrägte, in die Umfangnut eingreifende Rastnocken aufweist, und daß der Sicherungsring an seiner der angeschrägten Seite der Rastnocken abgekehrten Seite mit einem nach innen vorspringenden Anschlagflansch versehen ist. Der einteilig ausgeführte Sicherungsring läßt sich über die zusammengesetzten Ringhalbschalen axial überschieben, bis die angeschrägten Rastnocken in die Umfangsnut einrasten und der Anschlagflansch des Sicherungsrings axial an der Außenseite der Ringhalbschalen bzw. einem die Umfangsnut begrenzenden Ringwulst der Ringhalbschalen zur Anlage kommt. Aus dieser Raststellung kann der Sicherungsring nur gelöst werden, indem entweder der Sicherungsring aufgeschlitzt und aufgespreizt wird oder der die Umfangsnut der Ringhalbschalen begrenzende seitliche Randwulst dadurch beschädigt wird, daß der Sicherungsring mit Gewalt axial abgezogen wird. Diese Maßnahmen können nicht unbemerkt ausgeführt werden, so daß eine weitestgehende Sicherung gegen Diebstahl gewährleistet ist.

In einer insbesondere für die Herstellung des Sicherungsrings besonders zweckmäßigen Ausführungsform des Erfindungsgedankens ist vorgesehen, daß die Rastnocken durch Einprägungen an der Außenseite des Sicherungsrings gebildet werden. Durch diese Einprägungen wird Material nach innen verdrängt, das die angeschrägten Rastnocken bildet.

Zweckmäßigerweise sind die beiden vom Sicherungsring umgebenen Ringhalbschalen durch zusammenwirkende Zentriervorsprünge und Zentrierausnehmungen an den Verbindungsstellen der beiden Ringhalbschalen gegenseitig zentriert, um eine gegenseitige Verschiebung der Ringhalbschalen im zusammengebauten Zustand zu verhindern.

Im Zusammenhang mit der erfindungsgemäßen Ausführung des Sicherungsrings hat sich die an sich bekannte Gestaltung der Ringhalbschalen als überraschend vorteilhaft erwiesen, bei der eine von der einen Ringhalbschale vorstehende, federnde Rastzunge in eine Ausnehmung der anderen Ringhalbschale derart einhakbar ist, daß die beiden Ringhalbschalen nur unter Beschädigung der Rastzungen voneinander lösbar sind. Dieses gewaltsame Lösen der Ringhalbschalen geschieht üblicherweise dadurch, daß ein Schraubendreher oder ein ähnliches flaches Werkzeug in die Trennfuge zwischen den beiden Ringhalbschalen eingeführt und hebelartig eingesetzt wird, um die beiden Ringhalbschalen auseinander zu sprengen oder die Rastzunge so zurückzudrücken, daß sie aushakt. Diese Maßnahmen werden durch den Sicherungsring verhindert oder doch wesentlich erschwert, weil der Sicherungsring die Trennfuge der beiden Ringhalbschalen teilweise überdeckt und dadurch das Ansetzen eines Werkzeugs erschwert, und weil der Sicherungsring die beiden Ringhalbschalen umgibt und somit verhindert, daß die beiden Ringhalbschalen auseinanderbewegt werden.

Die Erfindung wird nachfolgend an einem Ausführungsbeispiel näher erläutert, das in der Zeichnung dargestellt ist. Es zeigt:

Fig. 1 in perspektivischer Darstellungsweise einen Heizkörperventil-Thermostaten mit einer Diebstahlsicherung, deren beide Ringhalbschalen und deren Sicherungsring in auseinandergezogener Darstellung wiedergegeben sind,

Fig. 2 die beiden Ringhalbschalen vor ihrer Verbindung,

Fig. 3 einen vergrößerten Schnitt längs der Linie

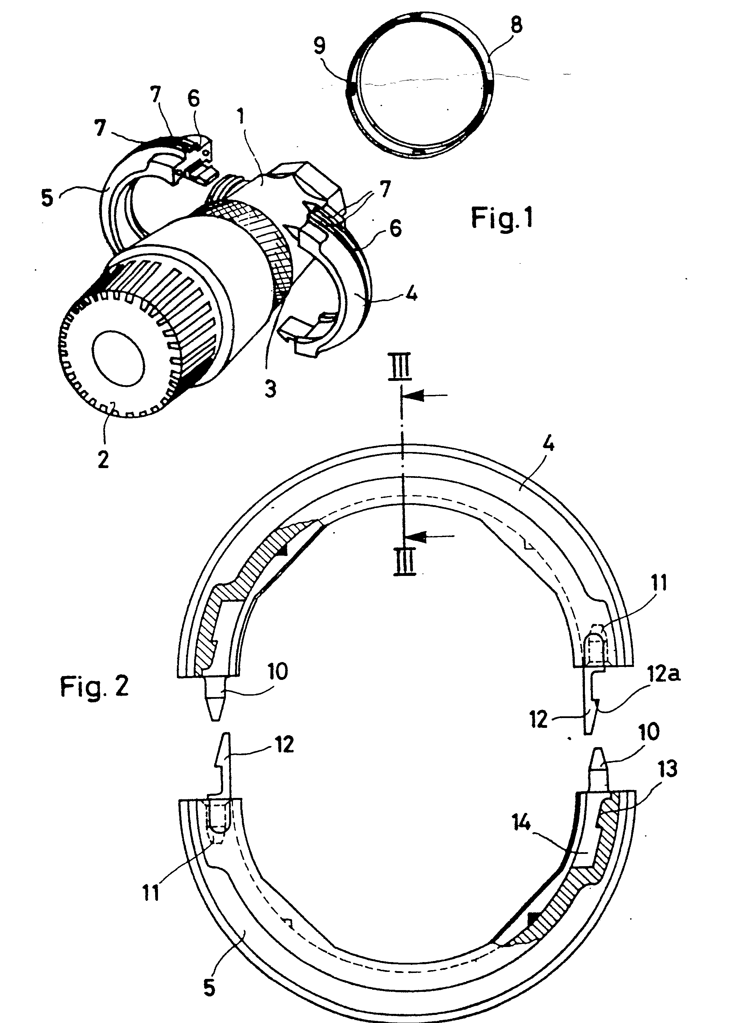

III-III in Fig. 2 mit aufgesetztem Sicherungsring und

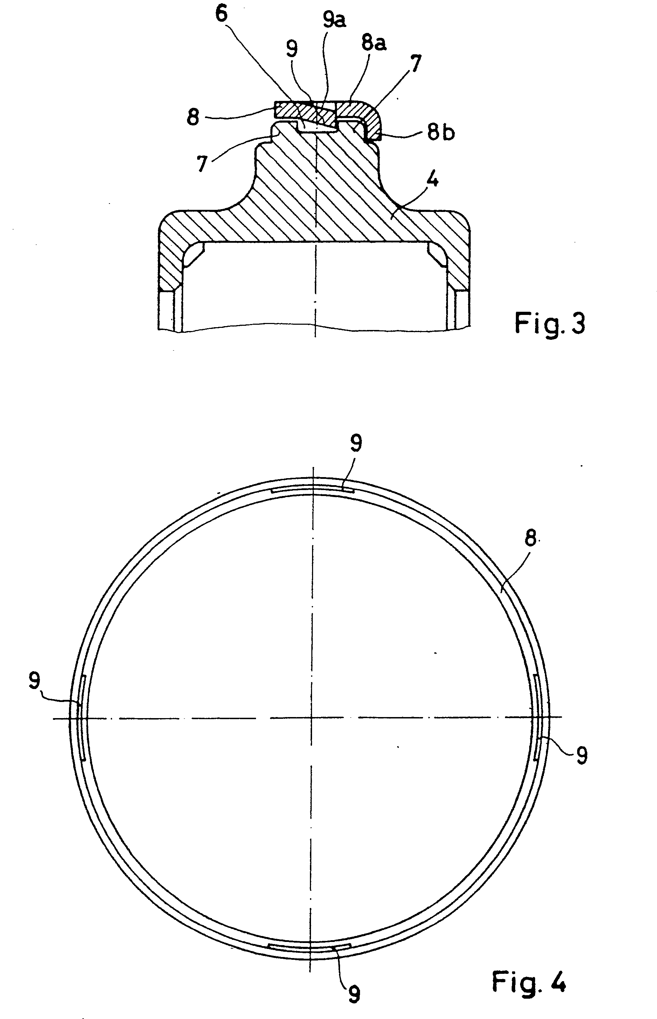

Fig. 4 den Sicherungsring in einer Stirnansicht.

An einem Heizkörperventil 1 ist ein Thermostat 2 mittels einer Überwurfmutter 3 angeschraubt. Zwei Ringhalbschalen 4, 5 bilden im zusammengesetzten Zustand einen die Überwurfmutter 3 umgreifenden Ring. An ihrer Außenseite weisen die Ringhalbschalen 4, 5 eine Umfangsnut 6 auf, die an beiden Seiten jeweils durch einen umlaufenden Wulst 7, 8 begrenzt ist.

Im montierten Zustand sind die beiden Ringhalbschalen 4, 5 von einem geschlossenen, einteiligen, metallischan Sicherungsring 8 umgeben, der einen zylindrischan Abschnitt 8a (Fig.4) aufweist, von dessen Innenseite am Umfang verteilt mehrere, beispielsweise drei Rastnocken 9 nach innen vorspringen, die im montierten Zustand in die Umfangsnut 6 eingreifen.

Die Rastnocken 9 sind axial nach einer Seite hin derart angeschrägt, daß sich der Sicherungsring 8 beim Überschieben über einen der beiden Wulste 7 an den Umfangsstellen aufweitet, an denen die Rastnocken 9 angeordnet sind, bis die Rastnocken 9 in die Umfangsnut 6 einrasten. An der Seite des Sicherungsrings, zu der die Rastnocken 9 ansteigen, weist der Sicherungsring 8 einen nach innan vorspringenden Anschlagflansch 8b auf, der im montierten Zustand an der Außenseite des einen Wulstes 7 anliegt (Fig.3).

Aus der Schnittdarstellung in Fig. 3 erkennt man, daß die nach innen vorspringenden Rastnocken 9 durch Einprägungen 9a an der Außenseite des zylindrischen Abschnitts 8a des Sicherungsrings 8 gebildet werden.

Die beiden Ringhalbschalen 4, 5, die symmetrisch ausgeführt sind (Fig. 2), weisen an ihrem einen Ende jeweils ein Paar von Zentrierzapfen 10 auf, die in Zentrierbohrungen 11 der jeweils anderen Ringhalbschale passen. Zwischen den Zentrierbohrungen 11 ist jeweils eine federnde Rastzunge 12 angeordnet, die einteilig mit der aus Kunststoff bestehenden Ringhalbschale 4 bzw. 5 ausgeführt ist und ein hakenartiges Ende 12a aufweist. Mit diesem hakenartigen Ende 12a ist die Rastzunge 12 hinter einen Einhakvorsprung 13 in einer Ausnehmung 14 der jeweils anderen Ringhalbschale derart einhakbar, daß die beiden Ringhalbschalen 4, 5 nur unter Beschädigung oder Zerstörung der Rastzungen 12 voneinandar lösbar sind.

Bei der Montage werden zunächst die beiden Ringhalbschalen 4, 5 zusammengesteckt, wobei die Zentrierzapfen 10 in die Zentrierbohrungen 11 eingeführt werden und die Rastzungen 12 in den Ausnehmungen 14 einhaken. In diesam Zustand sind die beiden Ringhalbschalen 4, 5 der Diebstahlsicherung bereits so unlösbar miteinander verbunden, daß die Überwurfmutter 3 nur nach gewaltsamer Trennung der beiden Ringhalbschalen 4, 5 zugänglich ist. Eine solche gewaltsame Trennung, beispielsweise durch Einführung eines flachen Werkzeugs in die Trennfuge zwischen den beiden Ringhalbschalen 4, 5 wird weitestgehend dadurch verhindert, daß der Sicherungsring 8 axial auf die miteinander verbundenen Ringhalbschalen 4, 5 aufgeschoben wird, bis seine Rastnocken 9 in die Umfangsnut 6 einrasten. Die Diebstahlsicherung kann jetzt nur dadurch gelöst werden, daß der metallische Sicherungsring 8 entweder aufgesägt oder in anderer weise aufgetrennt wird, bevor die beiden Ringhalbschalen zugänglich sind.

**Patentansprüche**

1. Diebstahlsicherung für Heizkörperventil-Thermostaten mit zwei aneinander festlegbaren Ringhalbschalen, die eine den Thermostaten mit dem Heizkörperventil verbindende Überwurfmutter umgreifen, die eine Umfangsnut aufweisen und von einem axial überschiebbaren, geschlossenen metallischen Sicherungsring umgeben sind, dadurch <u>gekennzeichnet</u>, daß der Sicherungsring (8) an seiner Innenseite am Umfang verteilt mehrere einseitig angeschrägte, in die Umfangsnut (6) eingreifende Rastnocken (9) aufweist, und daß der Sicherungsring (8) an seiner der angeschrägten Seite der Rastnocken (9) abgekehrten Seite mit einem nach innen vorspringenden Anschlagflansch (8b) versehen ist.

2. Diebstahlsicherung nach Anspruch 1, dadurch gekennzeichnet, daß die Rastnocken (9) durch Einprägungen (9a) an der Aussenseite des Sicherungsrings (8) gebildet werden.

3. Diebstahlsicherung nach Anspruch 1, dadurch gekennzeichnet, daß die beiden vom Sicherungsring (8) umgebenen Ringhalbschalen (4, 5) durch Zusammenwirken der Zentriervorsprünge (10) und Zentrierausnehmungen (11) an den Verbindungsstellen der beiden Ringhalbschalen (4, 5) gegenseitig zentriert sind.

4. Diebstahlsicherung nach Anspruch 3, dadurch gekennzeichnet, daß eine von der einen Ringhalbschale (4 bzw. 5) vorstehende, federnde Rastzunge (12) in eine Ausnehmung (14) der anderen Ringhalbschale (5 bzw. 4) derart einhakbar ist, daß die beiden Ringhalbschalen (4, 5) nur unter Beschädigung der Rastzunge (12) voneinander lösbar sind.

**REVENDICATIONS**

1. Dispositif anti-vol pour thermostats de soupapes de radiateurs, comprenant deux demi-coquilles annulaires pouvant être fixées l'une à l'autre, qui entourent un écrou d'accouplement reliant le thermostat à la soupape du radiateur, qui presentent une gorge périphérique et sont entourées par une bague de securité métallique fermée et pouvant être enfoncée axialement, caractérisé en ce que la bague de sécurite (8) presente plusieurs saillies d'arrêt (9) en oblique sur un côté, reparties sur le côté interne de sa périphérie, et pénétrant dans la gorge périphérique (6), et que la bague de sécurité (8) est munie sur son côté qui est à l'opposé du côté en oblique des saillies d'arrêt (9) d'une joue de butée (8b) faisant saillie vers l'intérieur.

2. Dispositif anti-vol selon la revendication 1, caractérisé en ce que les saillies d'arrêt (9) sont constituées par des empreintes (9a) sur le côté extérieur de la bague de securité (8).

3. Dispositif anti-vol selon la revendication 1. caractérisé en ce que les deux demi-coquilles annulaires (4, 5) qui sont entourées par la bague de sécurité (8) sont centrées mutuellement par coopération de saillies de centrage (10) et d'évidements de centrage (11) dans les positions de raccordement des deux demi-coquilles annulaires (4, 5).

4. Dispositif anti-vol selon la revendication 3. caractérisé en ce qu'une languette d'arrêt élastique (12) faisant saillie à partir de l'une des demi-coquilles annulaires (4 ou 5) peut être accrochée dans un évidement (14) de l'autre demi-coquille annulaire (5 ou 4) de manière que les deux demi-coquilles annulaires (4, 5) ne puissent être détachées l'une de l'autre qu'en endommageant les languettes d'arrêt (12).

## Claims

1. Theft-preventing device for a radiator valve thermostat having two annular half shells, which may be secured to each other, surrounding a coupling nut connecting the thermostat to the radiator, and comprising a peripheral groove, the two annular half shells being encircled by a closed metal retaining ring, which may be slipped axially over the said annular half shells, characterised in that the retaining ring (8) comprises a plurality of locking cams (9) distributed over the periphery of the interior wall thereof, the locking cams (9) being bevelled in one direction and engaging in the peripheral groove (6), and the retaining ring (9) is provided with a stop flange (8b) on the side thereof facing away from the bevelled side of the locking cams (9), the stop flange projecting inwards.

2. Theft-preventing device according to claim 1, characterised in that the locking cams (9) are formed by impressions (9a) on the outside of the retaining ring (8).

3. Theft-preventing device according to claim 1, characterised in that the two annular half shells (4, 5) encircled by the retaining ring (8) are mutually centred by means of the cooperation of centering projections (10) and centering recesses (11) at the adjoining faces of the two annular half shells (4, 5).

4. Theft-preventing device according to claim 3, characterised in that a resilient locking tongue (12) projecting from one annular half shell (4 or 5) may be hooked into a recess (14) in the other annular half shell (5 or 4), such that separation of the two annular half shells (4, 5) is only possible by damaging the locking tongue (12).

0 060 379

Fig.1

Fig. 2

0 060 379

Fig. 3

Fig. 4